# FASCICULE DE BREVET EUROPEEN

(11) **EP 0 420 708 B1**
(45) Date de publication et mention de la délivrance du brevet: **10.03.1993**
(21) Numéro de dépôt: 90402363.7
(22) Date de dépôt: 24.08.1990
(51) Int. Cl.: B60K 37/00, G02B 27/00

(54) **Système d'affichage d'informations, à l'intérieur d'un véhicule automobile, à l'usage du conducteur du véhicule**
Fahrzeug-Lenker Informations-Anzeigesystem im Inneren eines Kraftfahrzeuges
Driver's information display system at the interior of a car

(30) Priorité: 28.08.1989 FR 8911309
(43) Date de publication de la demande: 03.04.1991
(73) Titulaire: AUTOMOBILES PEUGEOT, 75116 Paris (FR); AUTOMOBILES CITROEN, 92200 Neuilly-sur-Seine (FR)
(72) Inventeur: Chouin, Michel, F-78800 Houilles (FR)
(74) Mandataire: Berger, Helmut

(56) Documents cités:
- WO-A-89/02611
- DE-A- 2 942 730
- GB-A- 2 076 557
- GB-A- 2 094 051
- GB-A- 2 203 883

## Description

L'invention a pour objet un système d'affichage d'informations, a l'intérieur d'un véhicule automobile, à l'usage du conducteur du véhicule, du type comprenant un miroir placé dans la planche de bord du véhicule, avantageusement sous le pare-brise, à proximité d'un appareil indicateur invisible pour le conducteur et adapté pour produire une image de l'information affichée sur cet appareil (voir WO-A-8 902 611).

On connaît déjà un système de ce type, dans lequel l'appareil indicateur est adapté pour afficher l'information relative à un paramètre de fonctionnement du véhicule. Ainsi l'appareil indicateur pourrait être le cadran de compteur kilométrique. Ce système d'affichage présente l'avantage que l'image de l'information apparaissant sur l'afficheur de l'appareil indicateur est située plus en avant dans le véhicule et donc plus éloignée des yeux du conducteur, ce qui réduit l'effort d'accommodation visuelle par rapport au regard principalement fixé en avant du véhicule.

Le système connu a cependant l'inconvénient, lorsque plusieurs paramètres doivent être affichés de cette manière, d'exiger une grande surface réfléchissante, ce qui présenterait un encombrement excessif sur le tableau de bord et rendrait la surveillance de ces paramètres difficile à assumer par le conducteur en retenant indûment l'attention de celui-ci au détriment de la conduite du véhicule.

La présente invention a pour objectif de proposer une solution à ce problème.

Pour atteindre ce but, le système selon l'invention est caractérisé en ce que l'appareil indicateur est un dispositif d'affichage à cristal liquide adapté pour afficher les informations relatives à plusieurs paramètres, avantageusement à des paramètres devant être particulièrement surveillés par le conducteur.

Selon une autre caractéristique de l'invention, le système d'affichage comprend un deuxième dispositif d'affichage à cristal liquide directement visible pour le conducteur et adapté pour afficher les informations dont la lecture est moins fréquente, dont le conducteur a plus de temps pour en prendre connaissance ou dont l'affichage est occasionnel.

Selon une autre caractéristique avantageuse de l'invention, chaque dispositif d'affichage à cristal liquide est réalisé sous forme d'une plaque située dans des parois opposées d'un boîtier de façon que les dispositifs d'affichage soient orientés respectivement vers le miroir et vers le conducteur et éclairés par une même source lumineuse située à l'intérieur du boîtier.

Selon encore une autre caractéristique avantageuse de l'invention les dispositifs d'affichage sont commandés par un même ensemble électronique porté par le boîtier précité .

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention, et dans lesquels :

La figure 1 est une vue latérale en coupe dans la direction longitudinale du véhicule, avec arrachement, de la partie du tableau de bord et du volant du véhicule.

La figure 2 est une vue schématique de dessus démontrant les éléments essentiels du système d'affichage selon l'invention.

La figure 3 montre l'image d'une information produite par le dispositif indicateur à miroir selon l'invention.

Les figures 4 à 7 illustrent plusieurs types d'informations apparaissant sur le deuxième dispositif indicateur selon l'invention.

La figure 8a illustre schématiquement le champ d'affichage déformé de l'afficheur du dispositif indicateur à miroir, qui permet d'obtenir (figure 8b) une image réfléchie aux lignes verticales et horizontales perpendiculaires sur le miroir.

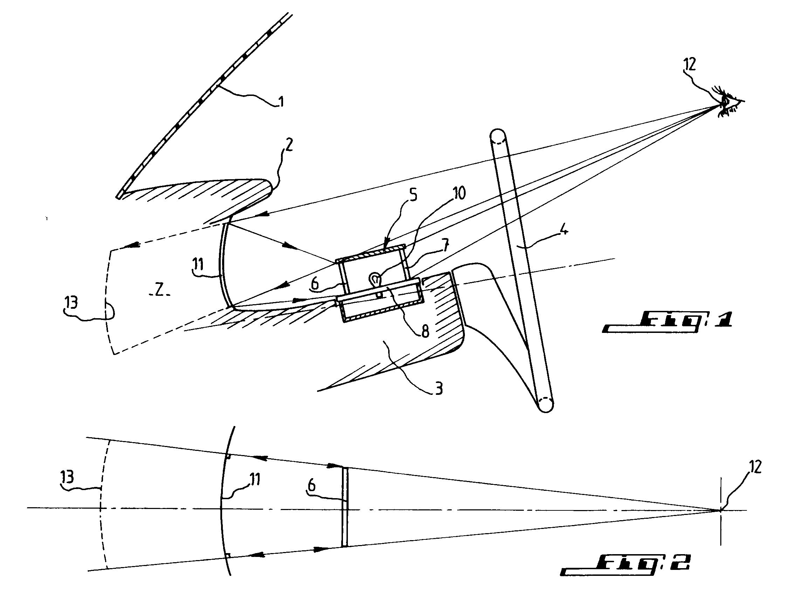

A la figure 1, les numéros de référence 1, 2, 3 et 4 indiquent respectivement le pare-brise, la planche de bord, le support de tableau de bord et le volant d'un véhicule automobile. Le système d'affichage selon l'invention comprend un boîtier 5 de forme générale parallélépipédique qui est monté sur le support de tableau de bord 3 et dont les parois parallèles en regard de la planche de bord 2 et du volant 4 comportent respectivement des premier et second dispositifs d'affichage à cristal liquide 6 et 7.

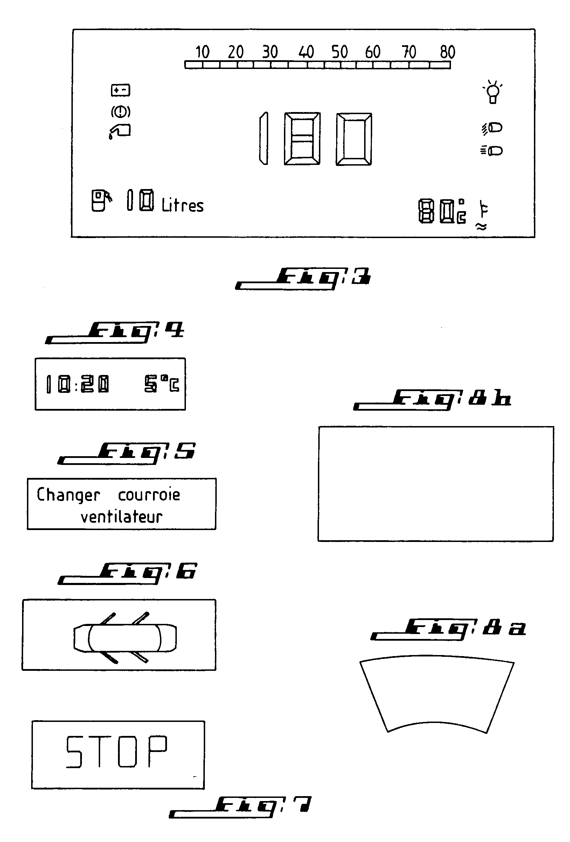

Chacun de ces dispositifs est réalisé sous forme d'une plaque, de façon connue en soi et tous les deux sont alimentés par des circuits électriques réalisés sous forme d'un circuit imprimé sur une plaque 8 disposée dans le boîtier 5. Le circuit imprimé comprend tous les composants électroniques permettant de calculer et de gérer les informations à transmettre au conducteur du véhicule. Certaines entrées du circuit et certains composants sont éventuellement communs aux deux dispositifs. Les dispositifs d'affichage 6 et 7 sont éclairés par une même source lumineuse 10 montée à l'intérieur du boîtier 5, l'information apparaissant sur les faces extérieures des plaques 6 et 7. Une vitre réfléchissante ou miroir 11 est disposée en regard du dispositif d'affichage 6 sur une partie sensiblement verticale de la planche de bord 2, de façon qu'elle puisse transmettre aux yeux du conducteur, schématiquement représentée en 12, une image de l'information reproduite sur la face d'affichage du dispositif 6, comme cela ressort des flèches aux figures 1 et 2. Le miroir 11 est concave, de sorte que l'image indiquée en 13 est plus grande que la représentation source de l'information sur l'afficheur 6 et est située plus en avant dans le véhicule et plus éloignée (environ 70 cm) du conducteur que l'afficheur. Il est à noter que la vitre réfléchissante 11 peut être incurvée dans le sens horizontal, ce qui permet également d'agrandir la largeur de l'image.

L'agrandissement de l'image a pour avantage d'assurer une bonne lecture de l'information tout en limitant la surface du dispositif d'affichage à cristal liquide 6 par rapport à un tableau de bord classique. La situation de l'image plus en avant et plus éloignée des yeux du conducteur permet une lecture plus facile pour des presbytes mais est également avantageuse pour des conducteurs ayant une bonne vision, car elle nécessite une accommodation de l'oeil moins importante par rapport au regard sur la route.

En raison des avantages que procurent le dispositif d'affichage 6, avec son miroir 12, les informations fournies au conducteur peuvent être hiérarchisées sur deux niveaux. Les informations apparaissant sur le dispositif d'affichage 6 et réfléchies par le miroir 11 sont celles qui sont relatives à des paramètres devant être particulièrement surveillés par le conducteur, tels que par exemple la vitesse du véhicule, le régime du moteur, le niveau de carburant, les différentes températures et la pression moteur et les différents voyants d'alerte (par exemple la pression d'huile) et de fonction (par exemple des phares, des feux arrière, de brouillard, etc). La figure 3 donne un exemple de l'affichage de ces différentes informations.

Par contre les informations fournies par le dispositif d'affichage 7 directement visibles par le conducteur seront celles dont la fréquence de lecture est moins importante, par exemple celles d'une montre ou de l'indicateur de température extérieure (figure 4), ou celles dont le conducteur a plus de temps pour en prendre connaissance, par exemple les informations de contrôle général au moment du démarrage, relatives au diagnostic en cas de panne, (figure 5), ou encore celles qui sont tout à fait occasionnelles, par exemple une image d'un véhicule automobile avec témoin de porte ouverte (figure 6), ou d'un voyant d'alerte d'arrêt d'urgence (figures 6 et 7).

Concernant l'image réfléchie par la vitre réfléchissante 11, pour obtenir une image avec des lignes verticales et horizontales sensiblement perpendiculaires, selon la figure 8b, il faut que l'information source soit au préalable déformée, comme cela est indiqué à la figure 8b.

Le système d'affichage selon l'invention présente des avantages considérables à la fois pour l'utilisateur du véhicule et pour le constructeur de celui-ci. Pour l'utilisateur on retiendra essentiellement la séparation des informations devant être particulièrement surveillées de celles d'une utilisation moins fréquente et la visualisation des premières par un agencement nécessitant une moins importante accommodation des yeux, d'où une lecture plus rapide. Pour le constructeur il est avantageux que la surface de l'information source soit moins importante que l'image, d'où une réduction du coût, et que le dispositif électronique de commande des dispositifs d'affichage 6 et 7 et l'éclairage soient communs aux deux dispositifs. En effet, il est avantageux que les deux dispositifs soient commandés par un seul et unique circuit imprimé tel que représenté en 8 dont certaines entrées et certains composants peuvent être communs aux deux afficheurs. Un autre avantage important réside dans la libération de la zone Z à l'arrière de la vitre réfléchissante, ce qui permet par rapport à l'agencement classique soit d'avancer le système encore plus et donc d'éloigner l'image des yeux de l'observateur soit de permettre le passage de conduits de chauffage ou d'un câblage électrique.

## Revendications

1. Système d'affichage d'informations, à l'intérieur d'un véhicule automobile, à l'usage du conducteur du véhicule, du type comprenant un miroir placé dans la planche de bord du véhicule, avantageusement sous le pare-brise, à proximité d'un appareil indicateur invisible pour le conducteur et adapté pour produire une image de l'information affichée sur cet appareil, ce dernier étant un dispositif d'affichage à cristal liquide (6), adapté pour afficher les informations relatives à plusieurs paramètres de fonctionnement et de conduite du véhicule, caractérisé en ce qu'il comprend un deuxième dispositif d'affichage a cristal liquide (7) directement visible pour le conducteur et en ce que chaque dispositif d'affichage à cristal liquide (6, 7) est réalisé sous forme d'une plaque située dans des parois opposées d'un boîtier (5) de façon que les dispositifs d'affichage (6, 7) soient orientés respectivement vers le miroir (11) et vers le conducteur (12) et éclairés par une même source lumineuse (10) située à l'intérieur du boîtier (5).

2. Système d'affichage selon la revendication 1, caractérisé en ce que les dispositifs d'affichage à cristal liquide (6, 7) sont commandés par des circuits électriques réalisés sous forme d'un circuit imprimé sur une même plaque (8) disposée dans le boîtier (5).

3. Système selon l'une des revendications précédentes, caractérisé en ce que le dispositif d'affichage à cristal liquide (6) est adapté pour produire une image déformée des informations de façon que l'image réfléchie sur le miroir (11) présente des lignes verticales et horizontales sensiblement perpendiculaires.

## Patentansprüche

1. Datensichtanzeigesystem innerhalb eines Kraftfahrzeugs zum Gebrauch des Fahrzeugführers, der einen vorteilhaft unterhalb der Windschutzscheibe in dem Schaltbrett des Fahrzeugs in der Nähe eines für den Führer unsichtbaren Anzeigegerätes gesetzten Spiegel aufweisenden Gattung, welches fähig ist, ein Bild der an diesem Gerät angezeigten Nachricht zu bilden, wobei dieses letztere eine Flüssigkristall-Sichtanzeige-Vorrichtung (6) ist, die fähig ist, Daten bezüglich mehrerer Betriebs-und Führungsparameter des Fahrzeugs anzuzeigen, dadurch gekennzeichnet, dass es eine von dem Führer unmittelbar sichtbare, zweite Flüssigkristall-Anzeigevorrichtung (7) aufweist und dass jede Flüssigkristall-Anzeigevorrichtung (6,7) in der Gestalt einer in entgegengesetzten Wänden eines Gehäuses (5) liegenden Platte hergestellt ist, so dass die Anzeigevorrichtungen (6,7) jeweils zum Spiegel (11) und zum Fahrer (12) hin ausgerichtet und durch eine selbe innerhalb des Gehäuses (5) liegende Lichtquelle beleuchtet sind.

2. Anzeigesystem nach Anspruch 1, dadurch gekennzeichnet, dass die Flüssigkristall-Anzeige-Vorrichtungen (6,7) durch in der Gestalt einer auf einer selben innerhalb des Gehäuses (5) angeordneten Platte (8) gedruckten Schaltung hergestellte elektrische Schaltungen gesteuert werden.

3. System nach einem der vorangehenden Ansprüche, dadurch gekennzeichnet, dass die Flüssigkristall-Anzeigevorrichtung (6) fähig ist, ein verzerrtes Bild der Nachrichten derart zu erzeugen, dass das durch den Spiegel (11) zurückgeworfene Bild etwa senkrecht zueinander angeordnete lotrechte und waagerechte Linien aufweist.

## Claims

1. System for the display of information inside of an automotive vehicle for the use of the driver of the vehicle, of the type comprising a mirror placed in the dashboard of the vehicle, advantageously underneath the windshield in proximity of an indicator apparatus invisible for the driver and adapted to produce an image of the information displayed on this apparatus, the latter being a liquid-crystal display device (6) adapted to display the information relating to several operating and driving parameters of the vehicle, characterized in that it comprises a second liquid-crystal display device (7) directly visible for the driver and in that each liquid-crystal display device (6, 7) is made in the shape of a plate located within opposite walls of a casing (5) so that the display devices (6, 7) be oriented towards the mirror (11) and towards the driver (12), respectively, and illuminated by a same light source (10) located inside of the casing (5).

2. Display system according to claim 1, characterized in that the liquid-crystal display devices (6, 7) are controlled by electric circuits made in the shape of a circuit printed on a same plate (8) arranged within the casing (5).

3. System according to one of the foregoing claims, characterized in that the liquid-crystal display device (6) is adapted to produce a deformed image of the information so that the image reflected on the mirror (11) exhibits substantially perpendicular, vertical and horizontal lines.
